# EUROPEAN PATENT APPLICATION

(11) **EP 4 641 154 A1**
(43) Date of publication of application: **29.10.2025**
(21) Application number: 24171826.1
(22) Date of filing: 23.04.2024
(51) Int. Cl.: G01K 1/14, G01K 1/143, G01K 13/02

(54) **NON-INVASIVE TEMPERATURE SENSOR WITH INSULATING SYSTEM**

(71) Applicant: ifm electronic gmbh, 45128 Essen (DE)
(72) Inventor: Carro, David, Havertown PA, 19083 (US)
(74) Representative: Ifm Patentabteilung

(57) **Abstract**

A non-invasive temperature sensor for measuring the temperature of a fluid in a pipe (2), comprising, a sensor body (1), a sensing tip (12) which is in contact with the surface of the pipe (2), wherein the outer contour of the sensing tip (12) defines a sensing zone (8), a shroud (3) fixed around the sensor body (1) designed in a way that it conforms to the pipe (2) surface, wherein a confined air chamber (4) is formed between the shroud (3) and the surface of the pipe (2), which is suitable for insulating the sensing zone (8) from temperature influences or heat loss, a clamping system (5) holding the sensor against the pipe (2) and applying conformal pressure on the shroud (3) maintaining it toward the pipe (2) surface, characterized in, that the shroud (3) covers a part of the surface of the pipe (2) which, starting from the sensing zone (8) in the circumferential direction of the pipe (2), has an extension in both directions which corresponds to at least an arc length of 30°.

## Description

The invention relates to non-invasive temperature sensors and, more particularly, a sensor fixed on pipes.

Non-invasive temperature sensors are used for measuring the temperature of a flowing or static medium inside of a container, which may be a piping or a vessel. This kind of sensor does not require any interference into the container. A basic solution for non-invasive temperature sensors consists of attaching and coupling a temperature-measuring apparatus (e.g. thermocouple, RTD etc.) directly onto the external surface of the container. This arrangement may then be enveloped in insulation to minimize the impact of ambient conditions on the measurements. The insulation is usually chosen by the user, it may be a paste, a solid or a gaz. This kind of thermal insulation may generate more work or costs for the user, not always be optimal for the system, and not be durable nor repeatable. Several solutions provide and insulation of the sensor, as in EP3633337A1, where the sensor is surrounded by a case which may be filled with an insulating material. The purpose of this case is to shield the sensor from the environment when measuring the temperature of the medium, although this solution extends more the insulation along the sensor than on the width. Other solutions provide a system surrounding the whole pipe, as in EP3070444A1 or DE102021104758A1, where the insulation is in a rigid structure which can also be a holding system as in the german application or a kind of housing tailored to the pipe as in the european document. The solution may still let the user choose and apply the insulation material, as in the DE102021104758A1 where it specifies that the insulation may be a paste, an airgel, etc. Those structures applied all around a pipe with determined diameter may be expensive as it is proper to solution with many layers and/or materials with specific technical properties, and they can make accessing the sensor for routine checks and maintenance difficult. If the insulating material is not chosen or applied properly by the user, the performance and accuracy of the sensor may be not optimal or worsened by a poor insulation choice. Finally, there are some sensors which have built-in extrapolation algorithms to account for the gradient in the pipe wall and to remove measuring inaccuracies, and optimize the measurement. Whereas, algorithms and models may fail because of a bug, update, etc. A direct measurement excludes that factor of error.

It is an object of the invention to provide a non-invasive temperature sensor with a durable, repeatable and flexible insulation for the pipe around the measuring point of the temperature sensor, assuring accurate measurement and adapting on large ranges of pipe dimeters.

This object is achieved by the temperature sensor according to claim 1. Advantageous embodiments are specified in the further dependent claims.

A non-invasive temperature sensor for measuring the temperature of a fluid in a pipe, surrounded by a shroud which covers a part of the surface of the pipe and which, starting from the sensing zone in the circumferential direction of the pipe, has an extension in both directions. This extension in the circumferential direction of the pipe corresponds to at least an arc length of 30°.

The extension of the shroud in the circumferential direction of the pipe, being equal to the arc length of a 30° section on the pipe, was determined by testing and it is an optimized angle. An arc length of an angle wider than 30° applied to the section of a chosen pipe diameter does not impact the improvement of the measurement's accuracy nor the gradient in the pipe wall, but it would make the sensor bulkier, which may not be suitable. If the angle was less than 30° the performance of the sensor would suffer.

In a preferred embodiment the shroud is made of high-performance plastic. The material for the shroud is chosen to be durable to washdown and harsh environments, and is rated for high temperatures, while also being flexible. The chosen polymer can be FKM (fluorocarbon-based fluoroelastomer material) or EPDM (ethylene propylene diene monomer elastomer material). The flexibility of the material allows a good adaptability of the shroud of different pipe diameters while the edge of the shroud is constantly in a fitted contact with the pipe's surface.

In another preferred embodiment the shroud covers a part of the surface of the pipe in the axial direction of the pipe, by an extension at least equal to the extension of the shroud in the circumferential direction of the pipe. This minimal surface of the pipe covered by the shroud assures a uniform insulation all around the sensing zone in different directions.

Preferably, the part of the shroud which is in contact with the pipe has an elliptical shape.

Advantages of this invention are that a durable insulation is provided with the temperature sensor, which assures repeatability by a defined surface of insulation of the pipe. This insulation fulfills the purpose of insulating the pipe and prevent from secondary heat loss which happens through the pipe walls. The durability is assured by the type of material used for the shroud and the use of air for insulation, avoiding the use of less durable insulation materials. Chosen materials assure a flexibility of the shroud and adaptability on different pipe diameters, so as good contact between pipe surface and shroud, keeping always air for insulation trapped under the shroud.

The invention is explained in more detail below with reference to the drawings.

It shows schematically:
Figure 1 is a sectional view of the non-invasive sensor mounted on a pipe
Figure 2 is a sectional view of the shroud around the sensor on a pipe
Figure 3 is a 3D view of the non-invasive sensor mounted on a pipe
Figure 4 is a schematic view of heat losses around a sensing zone
Figure 5 is a schematic view of a section of the pipe

In the following description of the preferred embodiments, identical reference signs denote identical or comparable components.

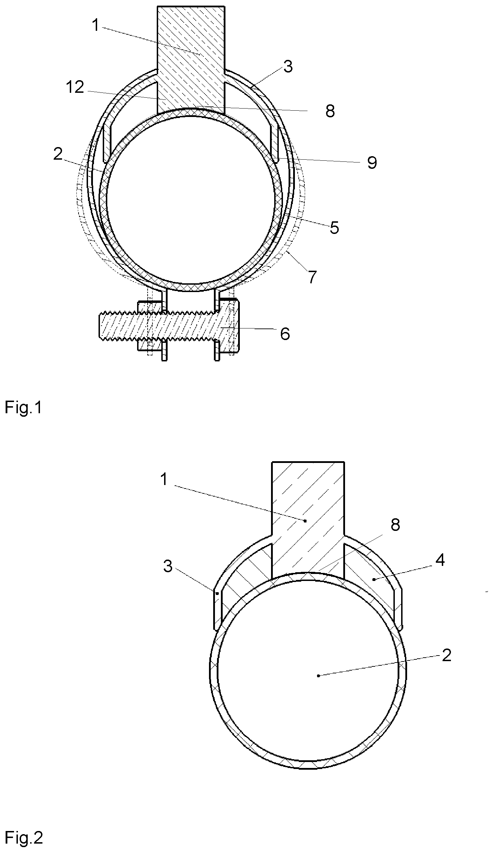

Figure 1 is a sectional view of the entire temperature sensor assembly on a pipe 2. A shroud 3 is placed around a sensor body 1 which is fixed to a pipe by a clamping system 5. The clamping system is closed by a tightening system 6 providing continuously an adjustable source of compressive force. The clamping system is represented in default condition 7 to illustrate the ability of this system to bend and adapt to the pipe 2. The clamping system 5 applies a constant and uniform force on the shroud 3, maintaining it against the pipe 2. The tightening system 6 has an adjustable tightening allowing adaptation of the clamping on different pipe diameters. The sensing zone 8 is the outer contour of the sensing tip 12 and defines a zone of contact between the sensing tip 12 and the pipe 2, where the temperature measures are acquired. The shroud 3 is made in a way that a minimum distance is defined between the sensing zone 8 and an edge of the shroud 9 in the circumferential direction of the pipe 2. This minimum distance corresponds to an arc length related to an angle of 30° starting from the sensing zone 8, on both sides of it in the circumferential direction of the pipe 2.

Figure 2 represents the sensor with insulation system composed of the shroud 3 and confined air chamber 4, placed on the pipe 2. When the sensor is applied on a pipe 2, the air gets trapped under the shroud 3 for purpose of insulation of the pipe's surface around the sensing zone 8.

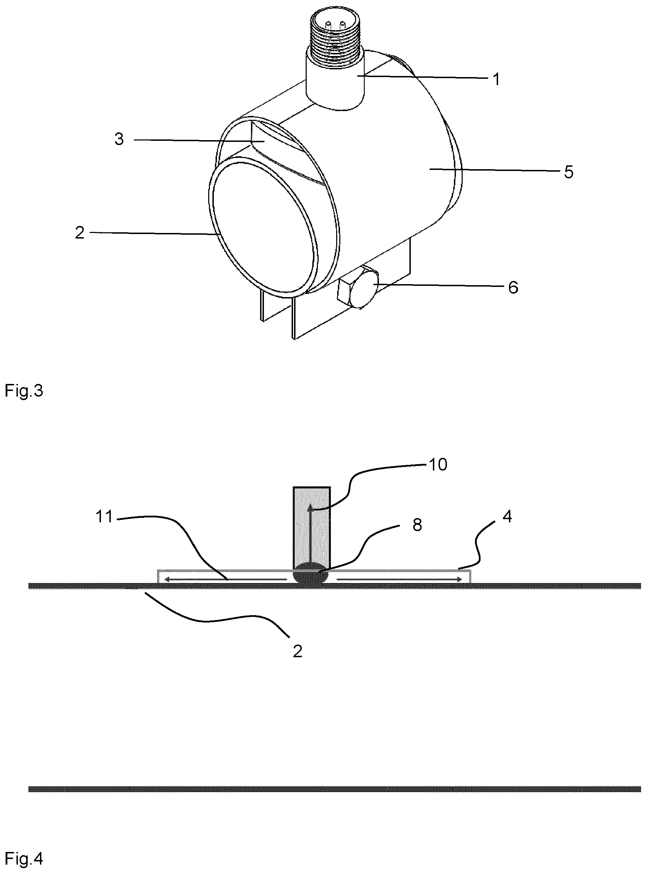

Figure 3 is a side view of the assembly, presenting the sensor body 1 and the shroud 3 held against a pipe 2 by the clamping system 5 closed by the tightening system 6 which can be a bolt and screw type, or any other tightening system providing adjustable source of compressive force.

Figure 4 represents the mechanism of heat loss occurring in a pipe 2 and impacting a non-invasive temperature measurement. The temperature of a fluid is measured through the pipe's wall in a sensing zone 8. A primary heat loss 10 is occurring through the sensor body, thus the sensor body usually comprises an insulation mean. A secondary heat loss 11 occurs from the sensing zone 8 through the walls of the pipe 2, in the axis of the pipe 2. Resulting in a temperature gradient in the pipe wall, the secondary heat loss 11 affects the accuracy of the measurements. The insulation, assured by the specific confined air chamber 4 around the sensing zone 8 applied on the pipe wall, eliminates the temperature gradient generated by the secondary heat loss 11. Insulating that kind of system minimizes the temperature influences from outside of the sensing zone resulting from heat exchanges between the environment and the pipe walls.

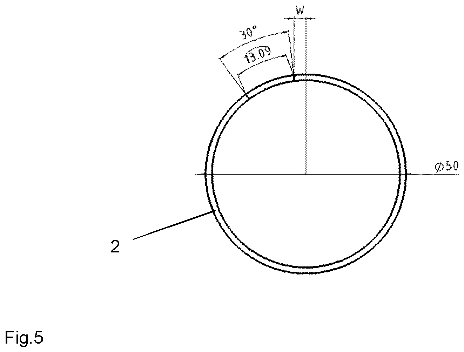

On figure 5 is represented an example of an arc length corresponding to an angle of 30°, representing one of the extensions of the shroud 3 in the circumferential direction of the pipe 2. This arc length starts from the sensing zone 8, in this figure W represents half of this sensing zone 8 and of the width of the sensing tip 12 from the center to the edge of it, as the outer contour of the sensing tip 12 defines a sensing zone 8.

### References:

- 1: Sensor body
- 2: Pipe
- 3: Shroud
- 4: Confined air chamber
- 5: Clamping system
- 6: Tightening system
- 7: Clamping system in default condition
- 8: Sensing zone
- 9: Edge of the shroud
- 10: Primary heat loss
- 11: Secondary heat loss
- 12: Sensing tip

## Claims

1. A non-invasive temperature sensor for measuring the temperature of a fluid in a pipe (2), comprising
- a sensor body (1)
- a sensing tip (12) which is in contact with the surface of the pipe (2),
wherein the outer contour of the sensing tip (12) defines a sensing zone (8),
- a shroud (3) fixed around the sensor body (1) designed in a way that it conforms to the pipe (2) surface,
wherein a confined air chamber (4) is formed between the shroud (3) and the surface of the pipe (2), which is suitable for insulating the sensing zone (8) from temperature influences or heat loss,
- a clamping system (5) holding the sensor against the pipe (2) and applying conformal pressure on the shroud (3) maintaining it toward the pipe (2) surface,
**characterized in,**
**that** the shroud (3) covers a part of the surface of the pipe (2) which, starting from the sensing zone (8) in the circumferential direction of the pipe (2), has an extension in both directions which corresponds to at least an arc length of 30°.

2. A non-invasive temperature sensor according to claim 1, wherein the shroud (3) is made of high-performance plastic.

3. A non-invasive temperature sensor according to one of the previous claims, wherein the shroud (3) covers a part of the surface of the pipe (2) in the axial direction of the pipe (2), by an extension at least equal to the extension of the shroud (3) in the circumferential direction of the pipe (2).

4. A non-invasive temperature sensor according to one of the previous claims, wherein the part of the shroud (3) in contact with the pipe (2) has an elliptical shape.
